# EUROPEAN PATENT APPLICATION

(11) **EP 4 464 466 A1**
(43) Date of publication of application: **20.11.2024**
(21) Application number: 22920580.2
(22) Date of filing: 20.12.2022
(51) Int. Cl.: B25J 9/16, B25J 19/06, G05B 9/02, G05B 19/048, G06F 11/14

(54) **CONTROL SYSTEM AND PROGRAM**

(30) Priority: 14.01.2022 JP 2022004708
(71) Applicant: OMRON Corporation, Kyoto 600-8530 (JP)
(72) Inventor: NAKASHIMA, Chisato, Kyoto-shi, Kyoto 600-8530 (JP)
(74) Representative: SONN Patentanwälte GmbH & Co KG
(86) International application number: PCT/JP2022/046971
(87) International publication number: WO 2023/136062

(57) **Abstract**

The present invention enables a protection stop and a restart to be prescribed and executed in a program provided by the provider of a controller.

A control system is provided with: a user program acquisition means that acquires a user program for causing a particular work-task to be executed by a robot, with the work-task being requested by a user and accomplished by a series of actions; a user program execution means that executes the user program; a system program storage means that stores a system program prescribing processing to detect an occurrence of a protection stop event in the robot, processing to stop execution of the user program when the protection stop event has occurred, and processing to restart execution of the user program from a predetermined recovery position of a user program; and a system program execution means that executes the system program.

## Description

### Technical Field

Technology disclosed herein relates to a control system and program.

### Background Art

Various technologies are being developed in the field of production site factory automation (FA) to control robots employed for automation. There are mechanisms in robot control to control an action from stopping to restarting when an emergency stop has been performed due to some reason or other.

For example, there is technology related to a robot control device for shortening the time to restart operation when an emergency stop has been performed on a robot (see, Patent Document 1: Japanese Patent Application Laid-Open (JP-A) No. H9-091918). In this technology, a robot is caused to perform an action to retreat one step at a time by a signal commanding a backtrack action, and operation of the robot is then restarted.

Moreover, there is technology related to a robot control method that enables proactive prevention of a so-called "temporary stop" caused by positional displacement of a workpiece component or the like (see, Patent Document 2: JP-A No. 2011-110629). In this technology, determination is made as to whether or not a positional error detected for respective normal positions of workpiece components is within a permissible range.

### SUMMARY OF INVENTION

### Technical Problem

In robot control such as in the examples given of related technology, control related to stopping and restarting a robot has been determined by a program to control actions of the robot.

However, nowadays there is increased sophistication in production site FA, and sometimes robots combine plural parts, such as image sensors and grippers, that are themselves subject to control, and sometimes work is performed by many robots acting in coordination with each other. Such sophisticated FA presumes that integrated control is performed by a higher level integrated controller, and that control of individual robots is performed by each robot controller. In a control system using an integrated controller, different programs are prescribed for a system program and for a user program.

For example, there is technology related to a control device that provides a configuration capable of efficiently operating plural types of program having different execution formats on a single control device (see, Patent Document 3: JP-A No. 2019-061466). In the technology of Patent Document 3, the system program is a program to implement basic functions. The term user program is used in Patent Document 3 as a collective term for programs prepared according to peculiar control uses by a user. The term user programs encompass, for example, programs that are scanned overall at each execution, such as an IEC program, and are capable of outputting control commands at each execution.

Related technology such as that of Patent Document 1 and Patent Document 2 does not envisage differential use of a system program in a control system and a user program, and merely envisage robot control as a user program. Moreover, in conventional FA an industrial robot is one that repeats a series of the same action, and accordingly assumes that the occurrence of an emergency stop typically caused by overtorque means that an dangerous situation that should not have arisen during normal action has occurred, and so there is a need for a person (user) to intervene for safety checking and recovery actions.

However, the technology related to the control of stopping and restarting such as that of the related technology is unable to be applied to a control system using both a system program and a user program. This is because when a robot has been stopped by a system program, actions to stop and restart are unable to be prescribed in a user program due to the execution of the user program having been stopped in consideration of compatibility and the like of the processing between programs. This means that if user intervention is included in the design of exceptional processing to restart an action after stopping, as is the conventional approach, then the need for user intervention arises each time there is a stop, with this being burdensome from the user perspective. Moreover, the system program control embodiment of Patent Document 3 is limited to an execution means of processing related to prioritization change, and no other control is prescribed.

In consideration of the above circumstances, an object of the present disclosure is to provide a control system and program capable of prescribing and executing protection stop and restart in a program provided by a controller provider.

### Solution to Problem

A first aspect of the present disclosure is a control system including a user program acquisition means that acquires a user program for causing a particular work-task to be executed by a robot, with the work-task being requested by a user and accomplished by a series of actions, a user program execution means that executes the user program, a system program storage means that stores a system program prescribing processing to detect an occurrence of a protection stop event in the robot, processing to stop execution of the user program when the protection stop event has occurred, and processing to restart execution of the user program from a predetermined user program recovery position, and a system program execution means that executes the system program.

In the first aspect,the processing to restart execution of the user program may have satisfaction of a restart requirement as a condition of restart.

In the first aspect, the restart requirement may include at least one out of occurrence of a malfunction not having been detected as a result of self-diagnosis, or divergence falling within a reference value for divergence between a position and orientation of a robot after a protection stop and a planned position and orientation corresponding to the position and orientation.

In the first aspect, the system program may furthermore prescribe processing that enables use, from the user program, of restart data utilized in execution after restarting the user program.

In the first aspect, the restart data may include a stop section that is a section in which a stop of execution in the user program has occurred.

The first aspect may further include a recovery position data acquisition means that acquires recovery position data, and the recovery position data may includes a plurality of recovery positions of the user program associated with plurality of stop section candidates of the user program, and processing to restart execution of the user program may be processing to restart execution of the user program according to the recovery position data.

A second aspect of the present disclosure is a program that is executable by one computer or plural cooperating computers to function as a user program acquisition means that acquires a user program for causing a particular work-task to be executed by a robot, with the work-task being requested by a user and accomplished by a series of actions, a user program execution means that executes the user program, a system program storage means that stores a system program prescribing processing to detect an occurrence of a protection stop event in the robot, processing to stop execution of the user program when the protection stop event has occurred, and processing to restart execution of the user program from a predetermined user program recovery position, and a system program execution means that executes the system program.

The control system and program of the present disclosure enable a protection stop and restart to be prescribed and executed in a program provided by a provider of a controller.

### BRIEF DESCRIPTION OF DRAWINGS

Fig. 1 is a diagram schematically illustrating an example of an overall configuration of a control system.
Fig. 2 is a block diagram illustrating an example of a hardware configuration of an integrated controller according to a present exemplary embodiment.
Fig. 3 is a diagram illustrating a functional configuration of an integrated controller.
Fig. 4 illustrates sequence control for a case in which script is executed to transmit a command from an integrated controller to a robot controller.
Fig. 5 illustrates sequence control for a case in which transmission of a direct command from an integrated controller to a robot is controlled.
Fig. 6 is a diagram schematically illustrating control content for executing a work-task of inserting a component into a workpiece plate.
Fig. 7 illustrates an example of a control flow when a work-task of inserting a component is executed.
Fig. 8 illustrates an example of acquisition data of a robot employed to determine a protection stop.
Fig. 9 illustrates an example of a control flow of protection stop determination.
Fig. 10 illustrates an example of a source of information that might be employed in restart determination after a protection stop.
Fig. 11 illustrates a control flow of restart determination after a protection stop.
Fig. 12 illustrates a control flow of recovery by a user program.
Fig. 13A illustrates an example of recovery positions with respect to a control flow when executing a work-task to insert a component.
Fig. 13B illustrates an example of a recovery position table.
Fig. 14A is a diagram schematically illustrating a case of pulling on a cable attached to a robot.
Fig. 14B is a diagram schematically illustrating a case of pulling on a cable attached to a robot.
Fig. 15 is a diagram schematically illustrating a case in which an externally fixed cable fixed to an externally mounted tool or the like is pulled.
Fig. 16 is a diagram schematically illustrating a case in which a protection stop is performed at an arm side when excessive load has been applied to the arm during opening or closing a door on a refrigerator truck or the like using a robot arm of a robot.

### DESCRIPTION OF EMBODIMENTS

Description follows regarding an example of an exemplary embodiment of the present disclosure, with reference to the drawings. Note that the same reference numerals will be appended in the drawings to the same or equivalent configuration elements and parts. Moreover, dimensions and proportions in the drawings are exaggerated for ease of explanation, and sometimes differ from actual proportions.

In the present exemplary embodiment, a system program of an integrated controller, and a user program, are used in a control system to prescribe processing that controls a production site robot. The present exemplary embodiment envisages a case in which a robot protection stop event has occurred, and prescribes processing of the system program and the user program. In the present exemplary embodiment, processing to perform stopping and restarting of execution of the user program is prescribed in a system program for a case in which a robot protection stop event has occurred. Details regarding "protection stop" and "protection stop event" are described later.

### Control System Overall Configuration Example

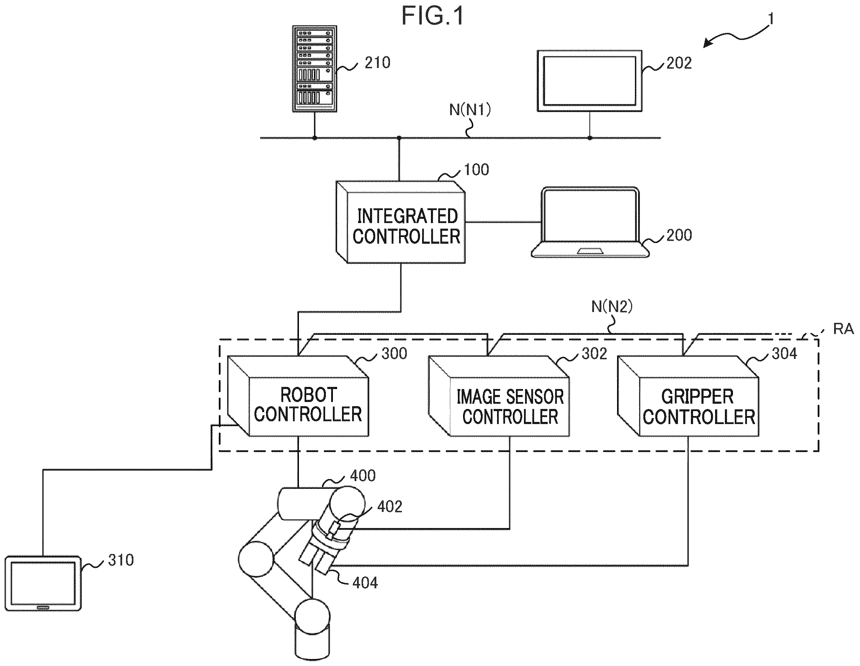

Fig. 1 is a diagram schematically illustrating an overall configuration example of a control system. As illustrated in Fig. 1, in a control system 1, an integrated controller 100 is connected to a tool terminal 200 by a USB or the like, and communication with various devices and various controllers is performed over a network N. The network N includes an information network N1 at an upstream side thereof, and a field network N2 at a downstream side thereof. A management terminal 202, a server device 210, and the like are connected over the information network N1. Various controllers of robot applications RA are connected over the field network N2. Moreover, other I/O devices and various sensors may also be connected. The robot applications RA include a robot controller 300, an image sensor controller 302, and a gripper controller 304, with control of actions of a robot 400 performed by these various controllers. Note that the integrated controller 100 is an example of a "controller" of the technology disclosed herein.

The tool terminal 200 is a device to assist with preparation needed for the integrated controller 100 to control a control target. Specifically, the tool terminal 200 provides a development environment (program production and editing tool, parser, compiler, and the like) for programs executed by the integrated controller 100, a setting environment to set parameters (configuration) of the integrated controller 100 and of various devices connected to the integrated controller 100, a function to output generated user programs to the integrated controller 100, a function to perform online correction/modification of the user program being executed in the integrated controller 100, and the like.

The management terminal 202 is a terminal employed to monitor and manage production overall, and is a terminal to manage the integrated controller 100 and the server device 210. A database system, a manufacturing execution system (MES), or the like are envisaged as the server device 210. A manufacturing execution system is a system that acquires information from control target manufacturing devices and facilities, that monitors and manages production overall, and that is capable of handling order information, quantity information, shipping information, and the like. However there is no limitation thereto, and a configuration may be adopted in which a device to provide an information service is connected to the information network N1. Processing to acquire information from control target manufacturing devices and facilities, and to perform macro- or micro-analysis and the like thereon is envisaged as the information service. For example datamining that extracts any characteristic trends contained in the information from the control target manufacturing devices and facilities, and machine learning tools to perform machine learning based on information from the control target facilities and machines, are envisaged therefor.

The robot controller 300 performs trajectory computation, angle computation for each axis, and the like according to control commands (position commands, speed commands, and the like) from the integrated controller 100, and drives servomotors (omitted in the drawings) and the like configuring the robot 400 according to the computation results thereof. Moreover, an image sensor 402 attached to the robot 400 is controlled by the image sensor controller 302, and a gripper 404 is controlled by the gripper controller 304. Moreover, changes to parameters of the robot 400, adjustments to actions, and the like are performed using a teaching pendant 310.

### Integrated Controller 100 Hardware Configuration Example

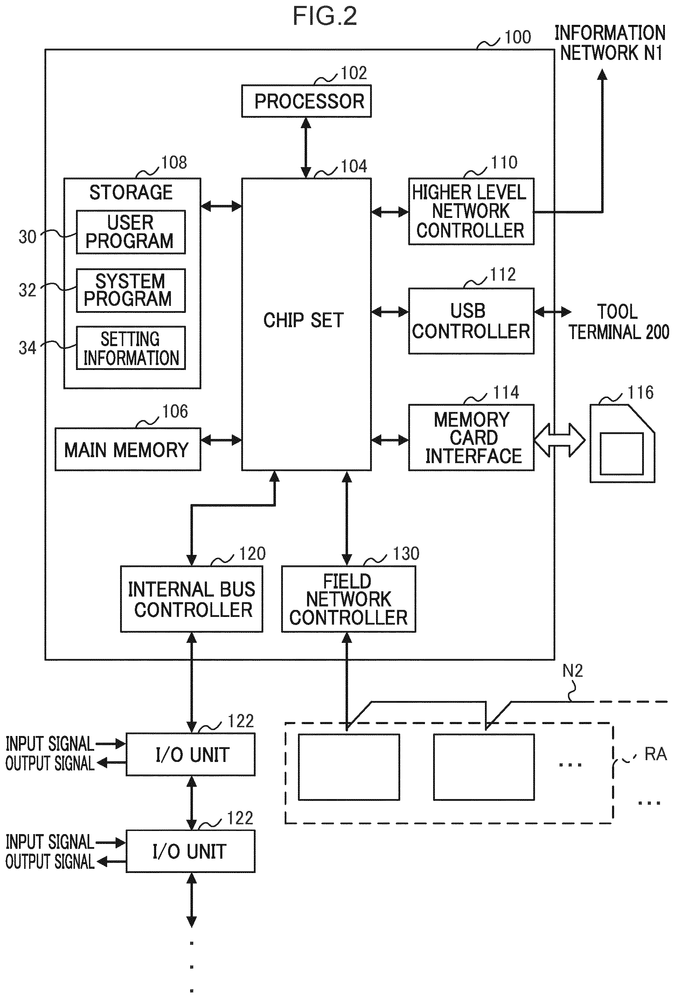

Next, description follows regarding a hardware configuration example of the integrated controller 100 according to the present exemplary embodiment. Fig. 2 is a block diagram illustrating an example of a hardware configuration of the integrated controller 100 according to the present exemplary embodiment.

As illustrated in Fig. 2, the integrated controller 100 includes a processor 102 that is a computation processing section called a CPU unit, a chip set 104, a main memory 106, storage 108, a higher level network controller 110, a universal serial bus (USB) controller 112, a memory card interface 114, an internal bus controller 120, and a field network controller 130.

The processor 102 is configured by a central processing unit (CPU), micro processing unit (MPU), graphics processing unit (GPU), or the like. The processor 102 may adopt a configuration including plural cores, and plural of the processors 102 may be installed. Namely, the integrated controller 100 includes one or plural of the processor 102, and/or includes the processor 102 with one or plural cores. The chip set 104 implements processing for the integrated controller 100 overall by controlling the processor 102 and peripheral elements. The main memory 106 is configured from a non-volatile storage device such as dynamic random access memory (DRAM), static random access memory (SRAM), or the like. The storage 108 is, for example, configured from a non-volatile storage device such as a hard disk drive (HDD), a solid state drive (SSD), or the like.

The processor 102 reads various programs stored in the storage 108, and implements control according to the control target and various processing such as described later by expanding and executing the various programs in the memory 106. The storage 108 is stored with a user program 30 produced according to the manufacturing devices and facilities of the robot 400 control target and the like, a system program 32 that implements basic functions of the control system 1, and setting information 34 for various settings. The system program 32 is a program provided by the provider of the integrated controller 100.

The higher level network controller 110 controls data exchange with the server device 210 and the like over the information network N1. The USB controller 112 controls data exchange with the tool terminal 200 over the USB connection.

The memory card interface 114 is configured such that a memory card 116 is attachable thereto and detachable therefrom, enabling data to be written to the memory card 116, and enabling various data (user programs, trace data, and the like) to be read from the memory card 116.

The internal bus controller 120 controls data exchange with an I/O unit 122 mounted to the integrated controller 100. The field network controller 130 controls data exchange with the robot application RA over the field network N2.

Fig. 2 illustrates an example of a configuration in which the processor 102 is provided with functions necessary to execute a program, however some or all of the provided functions may be implemented using a specialized hardware circuit (for example an ASIC, an FPGA, or the like). Alternatively main sections of the integrated controller 100 may be implemented using hardware following an ordinary architecture (for example an industrial PC using an ordinary PC as a base). In such cases, plural operating systems (OSs) for different applications may be executed in parallel using virtual technology, and applications needed may be executed on each OS.

Moreover, the control system 1 illustrated in Fig. 2 is an example of a configuration in which the integrated controller 100, the tool terminal 200, and the management terminal 202 are configured by separate bodies, however a configuration may be adopted in which all or some of functions thereof are aggregated to a single device.

### Integrated Controller 100 Functional Configuration Example

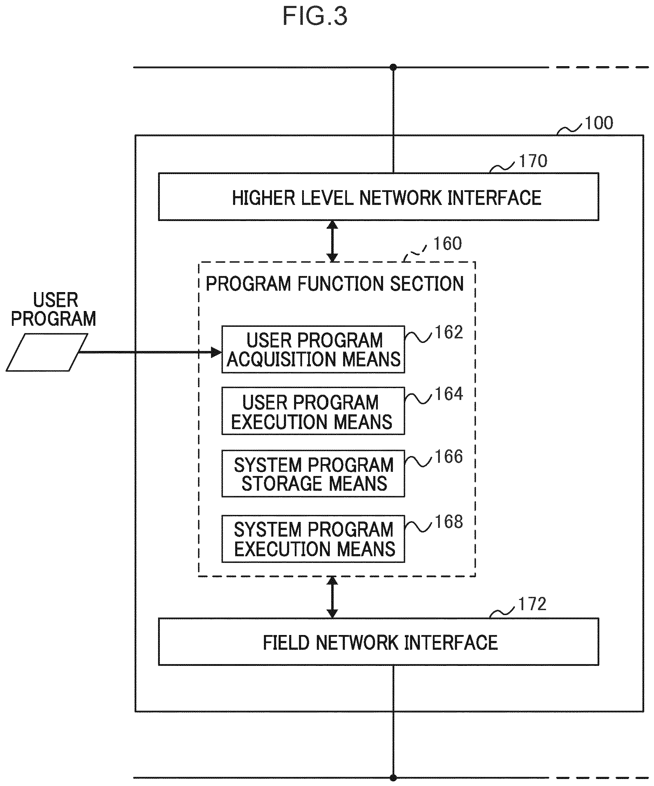

Fig. 3 is a diagram illustrating a functional configuration of the integrated controller 100. The integrated controller 100 includes, from a functional perspective, a program function section 160, a higher level network interface 170, and a field network interface 172. The program function section 160 is a functional section consolidating means that perform the function of overall execution control in relation to the user program 30 and the system program 32. The program function section 160 includes a user program acquisition means 162, a user program execution means 164, a system program storage means 166, and a system program execution means 168. The program function section 160 performs the function of conditioning data stored in memory (omitted in the drawings), and data for output to a user or the like, such as processing results from the user program execution means 164 or the system program execution means 168.

The higher level network interface 170 acts as an interface for data exchange with devices connected over the information network N1. The field network interface 172 acts as an interface for data exchange with various robots 400 connected over the field network N2.

The user program acquisition means 162 acquires the user program 30 from various devices capable of holding or inputting the user program 30 by some means or other. The following correspond to the user program acquisition means 162. Firstly, hardware and software of a communication interface with the tool terminal 200 for a case in which the control system 1 acquires the user program 30 from the tool terminal 200. Secondly, an input device and software related thereto for a case in which the control system 1 includes a user program 30 editing function, and the user program 30 is input from the input device such as a keyboard. Thirdly, hardware for network communication and software related to acquisition of the user program 30 for a case in which the control system 1 acquires the user program 30 over the information network N1 from a library of the user program 30 built in the server device 210 or the like.

The system program storage means 166 is a means to store the system program 32, and a storage means storable with a program, such as ROM, memory, or the like, is employed therefor.

The user program execution means 164 is a means to execute the user program 30. The system program execution means 168 is a means to execute the system program 32. The following configuration correspond to the user program execution means 164 and the system program execution means 168. Hardware such as a general purpose processor or ASIC, and software to manage resources and timings for user program execution, contained in the control system 1. Moreover, the user program execution means 164 and the system program execution means 168 may be the same entity, or may be separate entities to each other.

The system program 32 is a program to implement basic functions of the control system 1, and in the present exemplary embodiment various processing related to protection stop are prescribed in part of the system program 32. The various processing related to protection stop are processing to detect occurrence of a protection stop event in the robot 400 (occurrence detection processing), processing to stop execution of the user program 30 when a protection stop event has occurred (execution stop processing), and processing to restart execution of the user program 30 from a predetermined recovery position of the user program 30 (restart processing). The system program 32 accordingly includes a prescription of processing to stop execution of the user program 30 when a protection stop event has occurred. The action of the robot 400 is accordingly stopped when a protection stop event has occurred. Furthermore, processing to place brakes on movement of the robot 400 to quickly stop movement of the robot 400, processing to maintain a position and orientation of the stopped robot 400, and the like may be added.

### "Protection Stop" and "Protection Stop Event" Definitions

Description follows regarding "protection stop" in the present exemplary embodiment. "Protection stop" refers to stopping an action of the robot 400, with the objective of preventing damage to the robot itself or to a peripheral body when the robot 400 has contacted a peripheral body, when there is a concern that unplanned contact might be made, or when a high load has arisen in an action of the robot 400. A peripheral body includes a person.

Determination to stop an action when the robot 400 has contacted a peripheral body can be performed based on detection results regarding the magnitude of force received due to contact by the robot. A value of torque imparted by a motor to drive a joint of the robot, and a detection value of a force sensing sensor provided to the robot 400, may be utilized to detect the magnitude of force received by the robot 400. Similar applies to determination to stop an action when a high load has arisen.

Determination to stop an action when there is a concern that the robot 400 might make unplanned contact with a peripheral body may be performed based on detection results by a sensor, such as a camera, monitoring a situation at the periphery of the robot.

A "protection stop event" is an event that is the cause of a protection stop. Both the robot receiving a force of a specific magnitude or greater, and the presence of a body in the periphery of the robot giving rise to a concern regarding unplanned contact, correspond to protection stop events.

### Robot Control

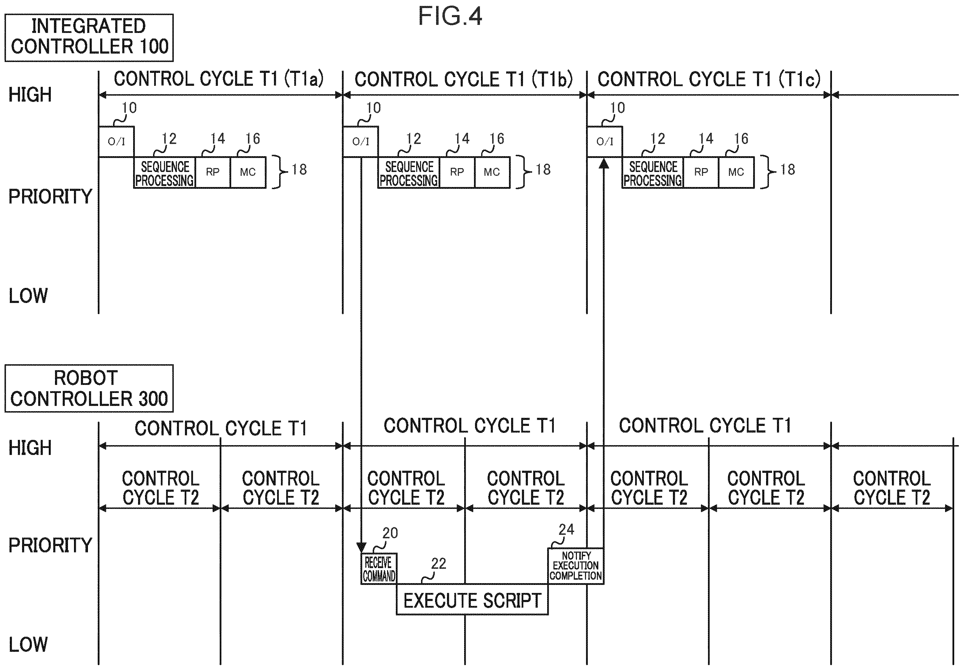

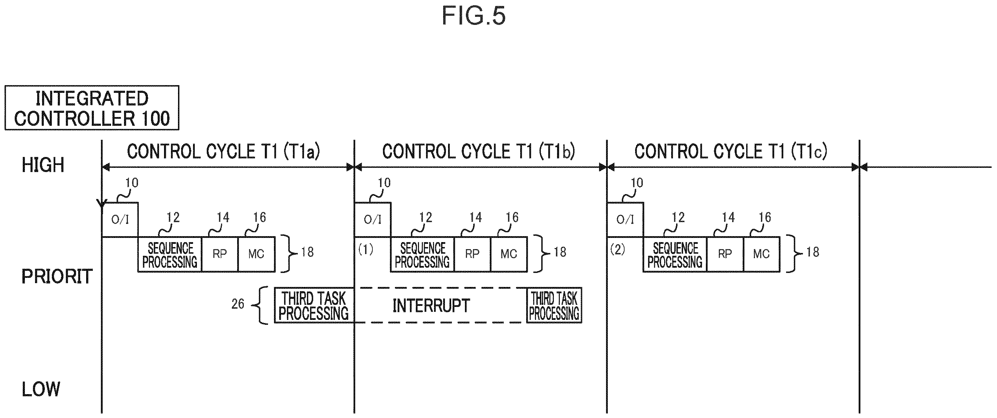

Robot control of the control system 1 will be respectively described with reference to Fig. 4 and Fig. 5 for anticipated cases of, for example: (A) transmission of a command from the integrated controller 100 to the robot controller 300 and execution of a script; and (B) control of transmission of a direct command from the integrated controller 100 to the robot 400. Each task executed by the integrated controller 100 has a prescribed priority, as described in Patent Document 3, and is triggered at respective control cycles T1. In a first task 10, input-output refresh processing is executed to update input values and control commands to field (denoted as "O/I" in Fig. 4 and Fig. 5, hereafter referred to as O/I processing). A program to perform the input-output refresh processing belongs to the system program 32. A task of the next priority to the first task 10 is a second task 18. A program according to a control objective of the user is executed in the second task 18. Specifically, the second task 18 includes sequence processing 12 to execute a sequence program, a first robot control program processing 14 (RP 14) to execute a first robot control program, and a motion control program processing 16 (MC 16) to execute a motion control program. The sequence program, the first robot control program, and the motion control program all belong to the user program 30. In the sequence processing 12, a sequence program is executed from top to bottom in one time of the control cycle T1. The sequence program has a role to control a device present in the robot periphery, for example a transport device. The first robot control program has a role to control the robot. A configuration may be adopted in which the first robot control program processing 14 is not provided, and a role to control the robot is given to the sequence program executed by the sequence processing 12. The motion control program is a program to, compute as control commands, for example, numerical values such as of position, speed, acceleration, jerk, angle, angular velocity, angular acceleration, and angular jerk, and the like for actuators such as servomotors.

Description follows regarding robot control for case (A), with reference to Fig. 4. A script execution command (hereinafter sometimes simply referred to as a command) is generated by the first robot control program processing 14 of the second task in the control cycle Tla. In O/I processing of the first task of the next control cycle T1b, the thus generated script execution command is transmitted to the robot controller 300. Note that although for convenience not illustrated in the drawings, a scheduler to control execution timings of each of the illustrated programs, a program to monitor occurrence of protection stop events, and the like, are executed in the background as the system program 32. The script execution command may be configured so as to be transmitted at a freely selected timing, such as immediately after execution of the first robot control program processing 14, instead of as a chain of the O/I processing.

The robot controller 300 executes control at respective control cycles T1. A command is received (20), script of the received command is executed (22), and an execution completion notification is transmitted to the integrated controller 100 (24). The control cycle T1 of the robot controller 300 is preferably of the same length as the control cycle T1 of the integrated controller 100 and synchronized thereto, however it may have a different length cycle and not be synchronized thereto. The control cycle in the robot controller 300 may be configured as a control cycle T2 shorter than (for example half the length of) the control cycle T1 of the integrated controller, such that script is executed for respective control cycles T2. Adopting such an approach enables robot control to be performed more smoothly. The script in this case is script of a scale that enables execution to be completed within the time of the control cycle T2. In such cases too, communication between the integrated controller 100 and the robot controller 300 is performed in each of the control cycles T1.

Description follows regarding robot control for case (B), with reference to Fig. 5. In Fig. 5, a third task 26 is added as the task to be executed by the integrated controller 100. The third task 26 has a lower priority than the second task 18, and is executed at a cycle of twice the length of the control cycle T1. A second robot control program is executed in the third task 26. The second robot control program belongs to the user program 30. The second robot control program is a program with the role to control part of the robot 400, for example a gripper thereof. The content of the second robot control program is equivalent to the script executed by the robot controller 300 in case (A). A command generated by the third task processing 26 for the gripper of the robot 400 is transmitted to the robot controller 300 as a chain of O/I processing. The command generated by the third task processing 26 is not transmitted by the O/I processing of reference (1) in the control cycle T1b when execution of the third task processing is not yet complete, and is instead transmitted in the O/I processing of reference (2) in the control cycle T1c after completion of such execution. Moreover, a configuration may be adopted in which content equivalent to the script executed by the robot controller 300 in the case (A) is prescribed in the first robot control program executed by the second task 18, such that a command for the robot 400 is generated by executing the first robot control program.

Any format may be employed as the format of robot control (A) and (B), and the format may be differentiated according to the control target site. For example, differentiation may be made with control of each joint of the robot arm controlled using the format of (A), and with control of opening or closing the gripper controlled using a format of (B). The formats (A) and (B) may also be differentiated in the same task, for example during the second task 18.

Sometimes a protection stop event occurs during control of a robot action. The processing when a protection stop event has occurred is prescribed in the system program 32.

### Control Related to Work-Task Example

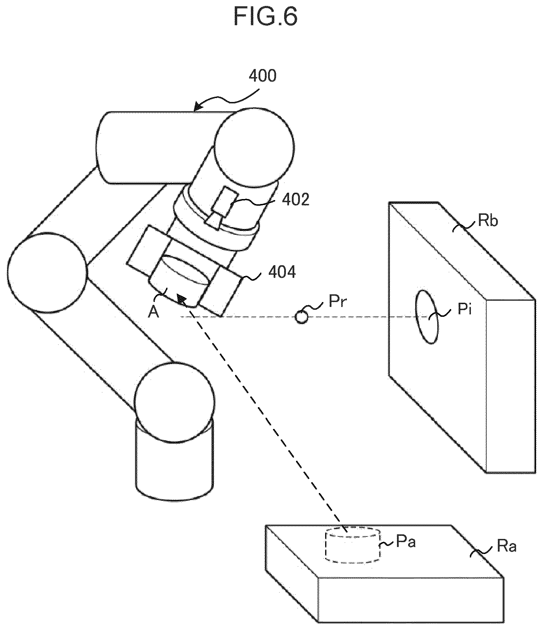

Next, description follows regarding a control flow for a case of control content to execute a work-task example to insert a component into a workpiece plate. The control format may be either a format to generate a script execution command as in (A) above, or a format in which a command for the robot is directly generated as in (B). Fig. 6 is a diagram schematically illustrating a control content to execute the work-task for inserting the component into the workpiece plate. As illustrated in Fig. 6, a work-task is envisaged of inserting a component A disposed on a tray Ra into a hole at an insertion position Pi of a workpiece plate Rb. The insertion is split into processes of preliminary insertion and main insertion.

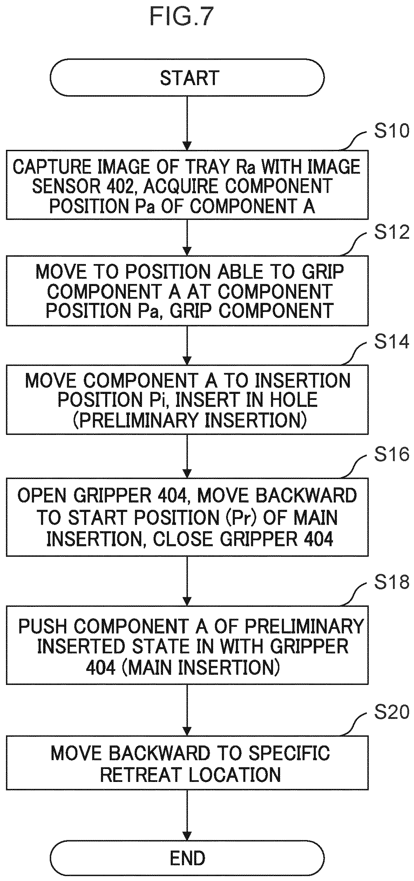

Fig. 7 is an example of a control flow when the work-task to insert the component is executed.

At S10, the tray Ra is imaged by the image sensor 402 to acquire a component position Pa of component A. The "component position" means information representing a position and orientation of a component.

At S12, the gripper 404 is moved to a position able to grip the component A at the acquired component position Pa, and the component A is gripped by the gripper 404.

At S14, the gripped component A is moved to the insertion position Pi, and is pushed into the hole (corresponding to a preliminary insertion process). The preliminary insertion is an action after the component A has been moved to the insertion start position Pi, and is an action to push the component A into the hole as far as a state in which part of the component A is inserted into the hole and the component A will not fall even if the gripper 404 is opened. The preliminary insertion is needed because the component A is not able to be deeply inserted while still in a state in which the side faces of the component A are being gripped by the gripper 404.

At S16, the gripper 404 is opened, the gripper 404 is moved backward with respect to the insertion position Pi of the workpiece plate Rb to a start position (Pr) for main insertion, and the gripper 404 is then closed.

At S18, the component A that is in the preliminary insertion state is pushed in by the closed gripper 404 (corresponding to the main insertion process) until at a specific depth, or until the bottom of the hole is reached, thereby completing main insertion by a push-in action.

At S20, the gripper 404 is moved backward with respect to the insertion position Pi of the workpiece plate Rb to a specific retreat location, and the work-task is ended. Note that the control for S 10 to S20 is merely an example thereof, and other control may be performed.

### Protection Stop Determination

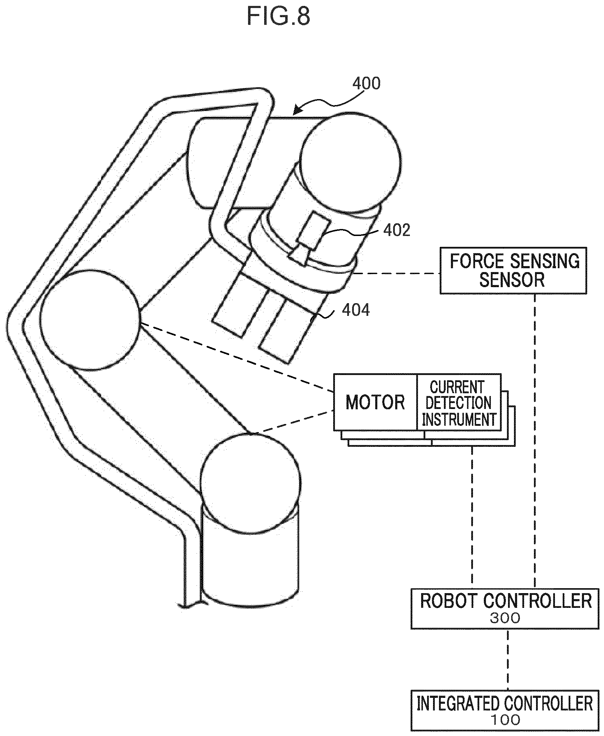

Next, description follows regarding an example of protection stop determination. The processing of the protection stop determination described below is one mode of processing to stop execution of the user program 30 by the system program 32. Fig. 8 illustrates an example of acquisition data of the robot 400 employed to determine protection stop. The robot controller 300 acquires force sensing information from a force sensing sensor of the robot 400, and acquires a current value from a current detection instrument for each axial motor of the robot 400. The integrated controller 100 acquires the force sensing information and the current values from the robot controller 300 as a chain of O/I processing of Fig. 4.

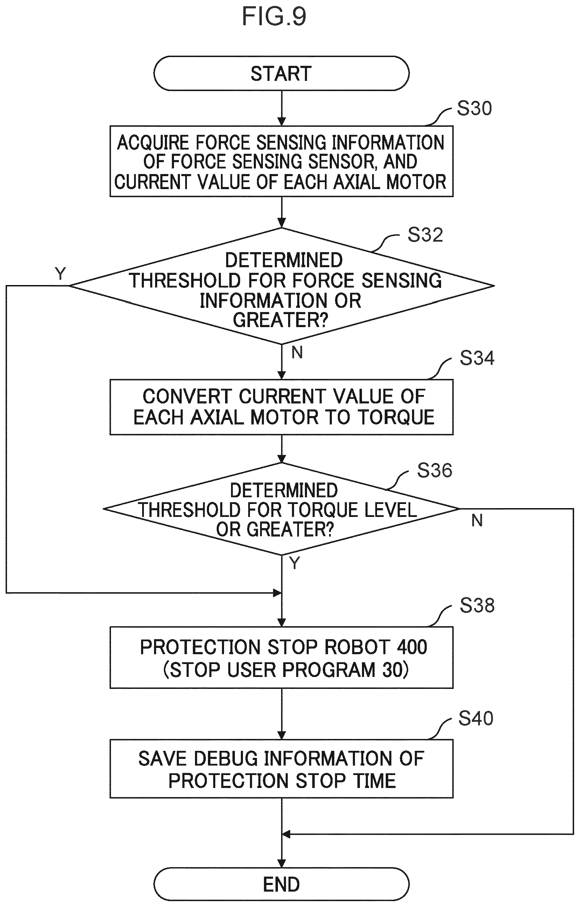

Fig. 9 illustrates an example of control flow of protection stop determination. The protection stop determination control flow is executed in the system program 32. As the information needed to control the protection stop determination, the setting information 34 of the integrated controller 100 is stored with a threshold determined for the force sensing information related to protection stop, with a threshold determined for torque level related to protection stop, and with torque constants to convert current values into torques.

At S30, the force sensing information of the force sensing sensor, and the current value of each of the axial motors, are acquired.

At S32, determination is made as to whether or not the acquired force sensing information is the determination threshold for the force sensing information or greater. Processing transitions to S38 (protection stop) when the threshold or greater, and processing transitions to S34 when less than the threshold.

At S34, the acquired current values for the respective axial motors are converted into torque based on the torque constants.

At S36, determination is made as to whether or not each of the converted torques is the determination threshold for torque level or greater. Processing transitions to S38 (protection stop) when determined to be the threshold or greater, and the processing is ended when determined to be less than the threshold as there is no need for a protection stop.

At S38, a protection stop is performed on the robot 400. The protection stop is executed by stopping the user program 30. Subsequent movement commands are no longer output when the execution of the user program 30 has been stopped, and the robot 400 is no longer moved by new movement commands.

At S40, the debug information during protection stop is saved.

If there is a movement command of the user program 30 being executed when execution stop is performed, then preferably execution of this movement command is cancelled. This thereby enables driving of the motors of the robot 400 to be prevented from continuing while, for example, a speed command being executed is still in a valid state. This cancel processing may be scripted in the system program 32, and may be configured so as to automatically cancel a command being executed when a command having a certain periodicity does not arrive at a section that drives a motor of the robot 400.

Processing such as processing to apply braking to the movement of the robot 400 in order to stop movement of the robot 400 quickly, processing to maintain the position and orientation of the stopped robot 400, and the like may be may be added to the system program 32.

Moreover, although the control flow of the protection stop determination of Fig. 9 has been described for a case of a protection stop based on the force sensing information and torque, apart from these, determination may also be made from a result of detecting an obstruction in the surroundings by the image sensor 402 or excessive load of gripper information.

### Restart Determination

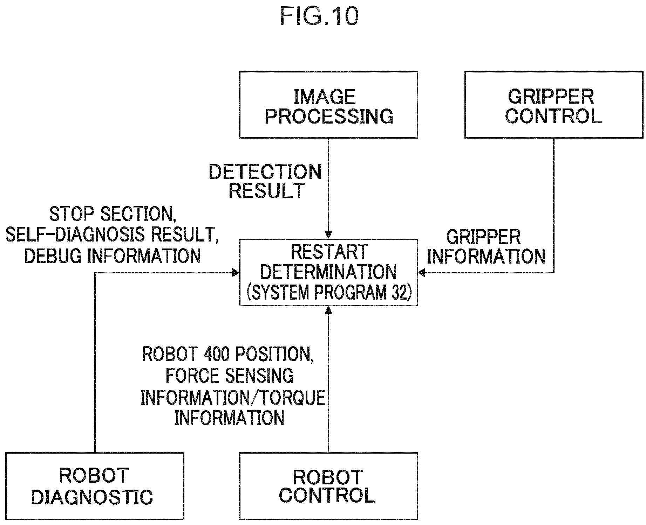

Next description follows regarding an example of restart determination after a protection stop. Fig. 10 illustrates an example of information sources that may be employed in restart determination after a protection stop. A detection result from "image processing", gripper information from "gripper control", a position of the robot 400 and force sensing information/torque information (current value) from the "robot control", a stop section of the user program 30, a self-diagnosis result, debug information, or the like from "robot diagnostics", and the like may be given as input from each of the information sources to the "restart determination" of the system program 32. The processing of restart determination described below is one mode of processing by the system program 32 to restart execution of the user program 30 from a predetermined recovery position of the user program 30. In the system program 32, restart requirements to be satisfied in the processing to restart execution of the user program are called restart conditions.

Moreover, restart data utilized for execution after restart of the user program 30 prescribes in the system program 32 processing that is able to be used from the user program 30. The stop section that is the section of the user program 30 being executed when the stop occurred may be configured so as to be included in the restart data.

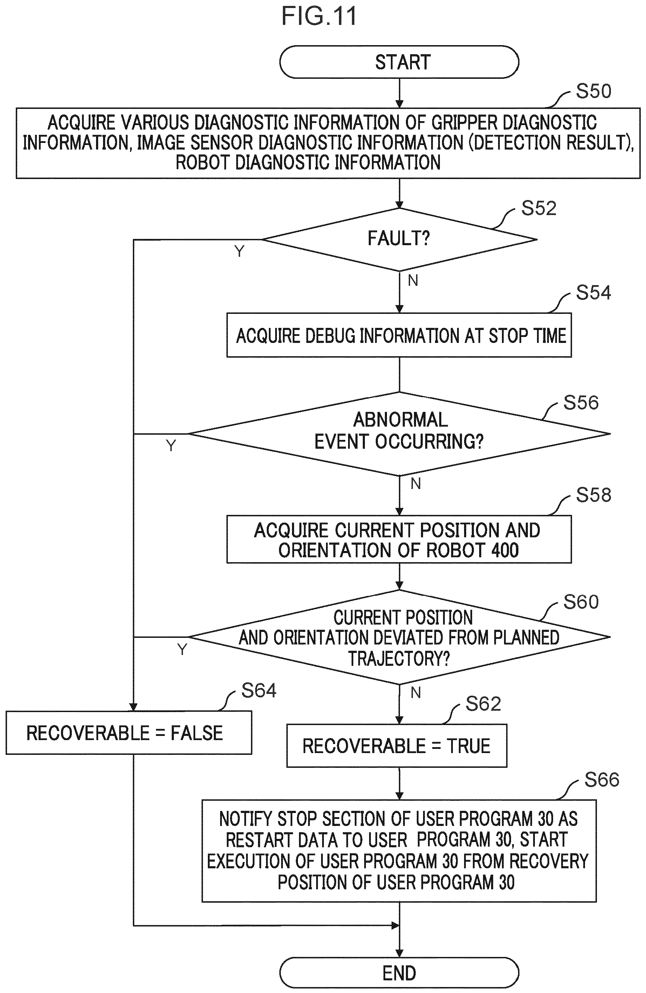

Fig. 11 illustrates a control flow of restart determination after a protection stop.

At S50, various diagnostic information are acquired of gripper diagnostic information, image sensor diagnostic information (detection results), and robot diagnostic information.

At S52, determination is made as to whether or not there is a fault using the various acquired diagnostic information. The determination at S52 is an example of "occurrence of a malfunction not having been detected as a result of self-diagnosis" in restart requirements of the present disclosure. Processing transitions to S64 when determined that there is a fault, and processing transitions to S54 when determined that there is no fault. Whether or not there is a fault may be determined by whether a diagnosis result for a fault is contained in one or other of the various diagnostic information. Moreover, a temporary malfunction that does not impede continuation of an action of the robot 400, such as cases in which a communication error occurred but normal communication was able to be restarted quickly, is treated as "no fault".

At S54, debug information of the stop time is acquired. Note that the debug information includes a planned trajectory by the user program 30 being executed at the stop time.

At S56, determination is made as to whether or not in the debug information there is an abnormal event other than a fault occurrence, such as a difficulty in recovering from the protection stop. An example of an abnormal event is an event in which damage to the object being manipulated has been detected. Processing transitions to S64 when determined that an abnormal event has occurred, and processing transitions to S58 when determined that no abnormal event has occurred.

At S58, a current position and orientation of the robot 400 is acquired.

At S60, the current position and orientation are compared against the planned trajectory, and determination is made as to whether or not the current position and orientation has deviated from the planned trajectory by the user program 30. Processing transitions to S62 when determined that there is no deviation, and processing transitions to S64 when determined that there is a deviation. Note that whether or not there is a deviation may be determined by whether or not the current position and orientation is displaced by a reference value or greater from the planned trajectory. The planned trajectory is the position and orientation of the robot 400 on the planed trajectory. Preferably determination is made by comparing the final command position executed against the detected position.

The determination of S60 is an example of "divergence falling within a reference value for divergence between a position and orientation of a robot after a protection stop and a planned position and orientation corresponding to the position and orientation" in the restart requirements of the present disclosure.

Processing transitions to S66 when recoverable/not-recoverable is determined as "True" (recoverable) at S62.

Processing is ended when recoverable/not-recoverable is determined as "False" at S64.

Elimination of a cause of the protection stop occurrence may be added as the restart requirements to determine recoverable. For example, in cases in which the protection stop occurred due to force sensing information, torque, or high gripper load, continuation of a state in which high load has been eliminated for a specific period of time or longer may be added to the restart requirements. In cases in which the protection stop occurred based on determination that there is a concern in the detection results that the robot 400 might make unplanned contact with a body in the surroundings, a determination that the concern of unplanned contact is no longer there due to the detected body no longer being detected may be added to the restart requirements.

At S66, the stop section of the user program 30 is notified to the user program 30 as the restart data, and execution of the user program 30 is started from the recovery position of the user program 30.

The stop section is a section of the user program 30 that is a section containing a step of a command of the user program 30 that was being executed when the protection stop occurred. The stop section is set as a section corresponding to one or a series of elementary actions of the robot suitable to ascertain as the stop position. For example, for a section of the user program 30 corresponding to the preliminary insertion action of the present exemplary embodiment, and for a section of the user program 30 corresponding to the main insertion action thereof, if execution of the user program 30 stopped within that section, then that section can be treated as corresponding to a position where execution of the user program 30 stopped. A notification is, for example, performed by storing data to identify the stop section in a memory area accessible even from the user program 30.

Other than the stop section, a time when execution of the user program 30 stopped, the position and orientation of the robot 400 when execution of the user program 30 stopped, detection values of torque received by the robot 400 and of force sensing sensors when execution of the user program 30 stopped, and detection results of image data containing a body in the surroundings imaged when, or after, execution of the user program 30 stopped, may also be included in the restart data.

### User Program 30 Control Flow After Recovery

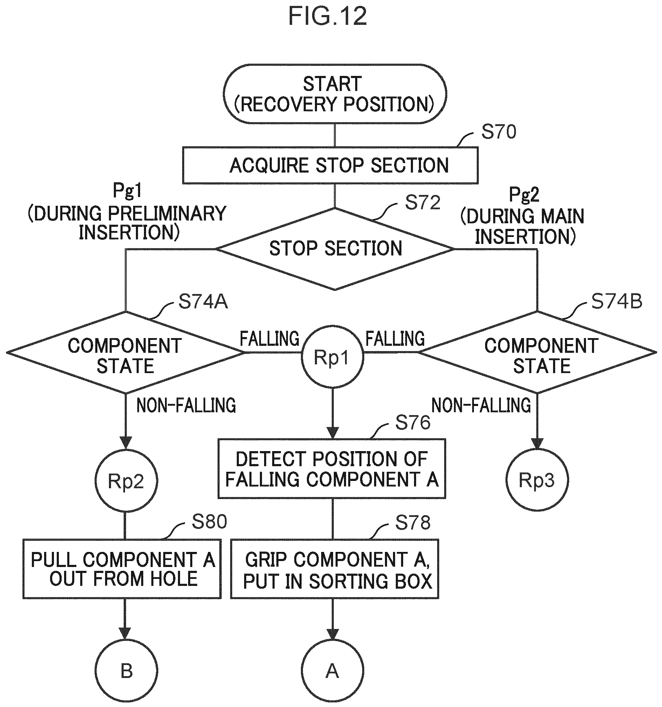

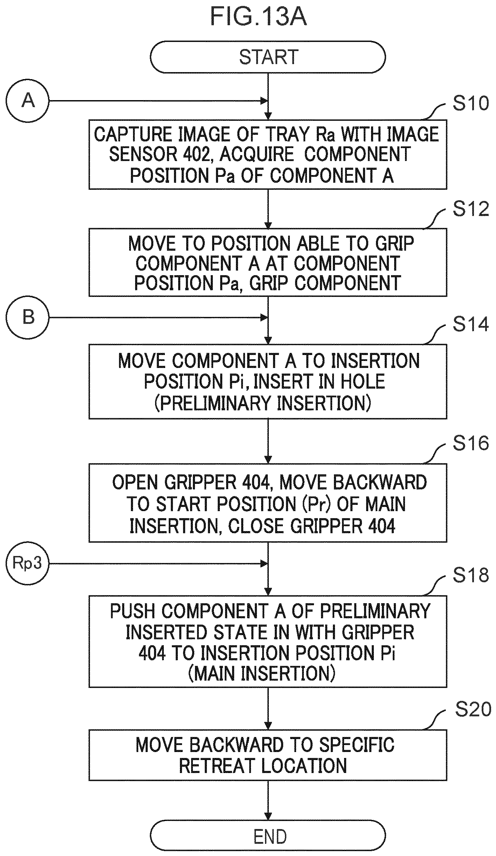

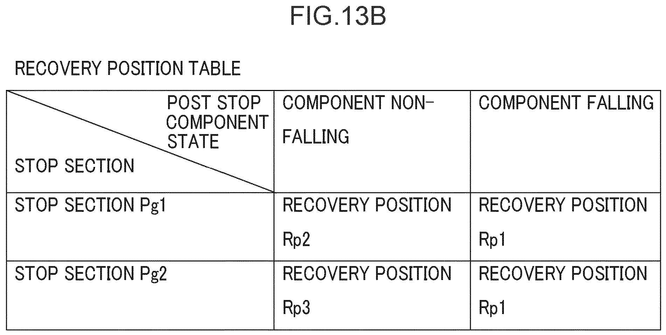

Fig. 12 illustrates a control flow by the user program 30 after recovery. Fig. 13A illustrates recovery positions with respect to a control flow when a work-task of inserting a component is being executed. Fig. 13B is an example of a recovery position table.

At S70, the stop section is acquired. At S72, determination is made as to whether the stop section corresponds to during preliminary insertion (Pg1), or corresponds to during main insertion (Pg2), and processing branches. At S74 (S74A, S74B), determination is made as to whether a component state is falling or non-falling, and processing branches. Processing transitions to Rp1 (S76) when falling. Processing transitions to Rp2 (S80) when determined non-falling at S74A. Recovery is performed by processing transitioning to Rp3 of Fig. 13A when determined non-falling at S74B.

At S76, a position of the falling component A is detected by the image sensor 402. At S78, the component A is gripped by the gripper 404, controlled so as to be placed in a sorting box, and recovery is performed by processing transitioning to A of Fig. 13A.

At S80, the component A is pulled out from the hole, and recovery is performed by processing transitioning to B of Fig. 13A.

The recovery position of the user program 30 is, for example, given by the system program 32 as a variable stored in an address used for recovery.

Moreover, a control flow by the user program 30 after recovery is not limited to being the flow described above. For example, sometimes the component A bites in the hole during the preliminary insertion action and is no longer able to move, and sometimes this results in a protection stop when the component A is further pushed in from this state. In such cases the preliminary insertion action may be retried after first pulling the component A out from the hole. Instead of retrying the preliminary insertion action immediately after being pulled out, the component A may be returned to the sorting box after being pulled out, and the returned component A re-gripped so as to retry the preliminary insertion action.

Even if there is a slight positional displacement between the component A and the hole, the preliminary insertion more easily succeeds from the first time, and the success rate is raised when preliminary insertion is retried, as long as a compliance module is inserted at a connection section between the robot arm and the gripper, or a resilient member layer is provided on a gripping face of the gripper, such that the component A is moved so as to be guided by a beveled edge of the component A and/or the hole. Sometimes there is success just by retrying the preliminary insertion action in this manner.

Moreover, when there is a protection stop during the main insertion action, the fingertips of the gripper that have pushed the component A are first separated therefrom, and then the main insertion action is retried. In cases in which there is a repeated protection stop even when the main insertion action has been retried a specific number of times, the component A may be gripped and pulled out from the hole, returned to the sorting box and re-gripped so as to retry from the preliminary insertion action.

Although in the description above there is a single recovery position of the user program 30, and the action flow after recovery is configured so as to be performed by the user program 30, the control actions performed by the user program 30 after recovery may be changed by the system program 32 selecting a recovery position from out of plural prepared recovery positions. Selection of recovery position may, for example, be performed according to a recovery position table of Fig. 13B. Recovery positions according to post stop component states are respectively illustrated in the recovery position table for the stop section Pg1 and the stop section Pg2, which are candidates for the stop section. The recovery position table is given together with the user program 30 to the integrated controller 100, and is accessible from the system program 32. Information of a method to identify the post stop component state (component non-falling or component falling) is appended to the recovery position table. A method to identify the post stop component state is, for example, performed by interrogating an image processing section that processes images of the image sensor 402, to obtain a determination result as to whether component non-falling or component falling. Depending on content of the action prescribed by the user program 30, instead of dividing in this manner by post stop component state, a recovery position table with recovery positions decided according to stop section may be employed. The recovery position table is an example of recovery position data of the present disclosure.

Moreover, a recovery position data acquisition means, for acquiring the recovery position data, may be further included in the functional configuration of the integrated controller 100 of Fig. 3, so as to acquire information of the recovery position table described above.

Moreover, in cases in which an action has been stopped based on determination (detection results) that there is a concern that the robot 400 might make unplanned contact with a body in the surroundings, a position at the top of the stop section of the user program 30 may be employed as the recovery position. Moreover, in cases in which an action has been stopped based on such a determination, execution from a step that continues straight on after the step where the user program 30 stopped may be decided, without backtracking steps.

### Cases Related To Protection Stop Events

Description follows regarding cases related to protection stop events. For example, even though there is no contact in manipulation, sometimes a protection stop event occurs when an excessive load occurs temporarily due to a cable being pulled. Moreover, due to variation in components, sometimes there is success, or cases of failure when a protection stop event arises, merely by using a different target body even though the action parameters remain the same. In such cases success may be anticipated by basically changing a combination of components.

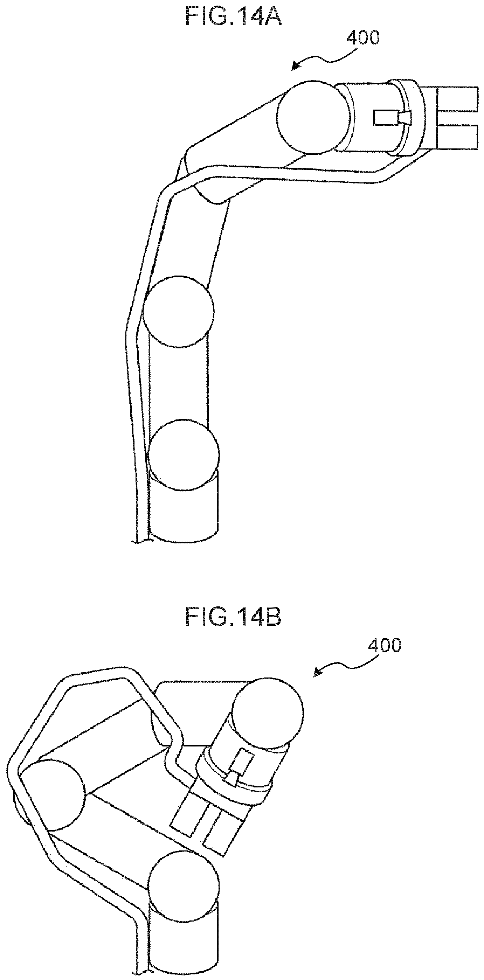

There are sometimes cases in which a cable is attached to the robot 400. Figs. 14 (Fig. 14A and Fig. 14B) schematically illustrate a case in which a cable attached to the robot 400 is being pulled. In Fig. 14A, pulling of the cable has occurred due to the action of the robot 400, and protection stop has occurred when a force is detected in an opposite direction, or a direction equivalent to the opposite direction, to the action of the robot 400 or to a movement of the robot hand. Force in such a direction is able to be detected by a force sensing sensor on the wrist or the like. Pulling of the cable occurs when the robot arm is extended. Such pulling can be computed given a model of the robot 400 itself. In such cases, as the recovery method restart of the action is expected to be from after the robot hand has been moved in a direction to bend the robot arm and the cable has been loosened, as illustrated in Fig. 14B.

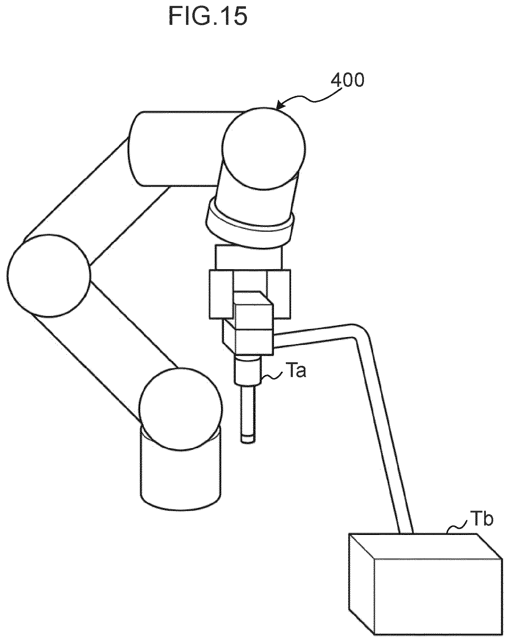

For pulling of a cable, there are also expected to be cases in which an externally fixed cable, fixed to an attached tool or the like, is pulled. As illustrated in Fig. 15, in a case in which the robot 400 grips a tool Ta, determination is that the cable has been imparted with excessive load by the tool Ta if an excessive load of force is detected, by the wrist force sensing sensor, in the opposite direction to a movement direction when the hand of the robot 400 is being moved in a direction away from a controller Tb affixed with the tool Ta cable. Recovery methods include: (1) If the robot 400 has two arms: a change to holding the tool Ta with the arm that has not been stopped. (2) If the robot 400 has one arm: re-actuating as is while moving the hand of the robot 400 in a direction to loosen the cable. The direction to loosen is the opposite direction to the original movement direction, and is a direction to approach the controller Tb. After such movement, a cumulative cable tension is initialized and the work-task is restarted. If the cause of tension on the cable is that the cable has become entangled with another non-illustrated article, then the work-task is restarted after the robot 400 has been moved so as to eliminate the tangle in the cable. Moreover, conceivably the work-task may be restarted after first releasing the tool Ta, and then picking it up again.

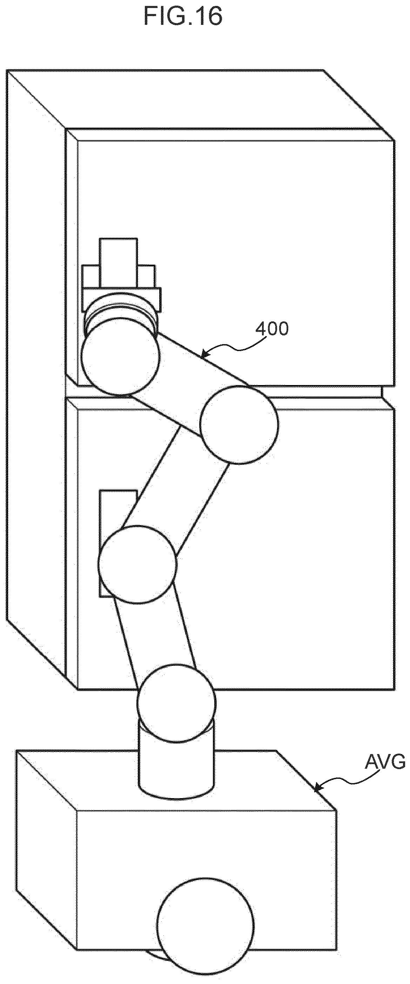

Moreover, as illustrated in Fig. 16, a conceivable case is one in which the robot 400 with excessive load acting thereon is protection stopped in a state in which a door of a refrigerator or the like has only been opened slightly during a work-task to open the door with the robot arm of the robot 400. In such cases, first the door is closed by an automated guided vehicle (AGV) loaded with the robot 400 being moved in a direction to close the door, and then a work-task to open the door is restarted after re-positioning the AGV so as to reduce load on the arm. In laboratory automation (LA), more than accomplishing a work-action to open a door, a perspective of suppressing a change in temperature inside the refrigerator to a minimum, namely an action to close the door of the refrigerator in such cases as quickly as possible, is a more important perspective. Thus control of recovery is envisaged to be by moving the AGV side alone to close the door.

The control system 1 of the present exemplary embodiment enables a protection stop and restart to be prescribed and executed in the system program 32 provided by the integrated controller 100 provider.

Supplementary explanation follows regarding a mode of the control system 1 of the present exemplary embodiment. The control system 1 enables implementation of the following modes in the exemplary embodiments. The control system 1 enables implementation of at least one out of the following (A1) or (A2) as a device provided with each means, or as plural inter-cooperating devices as a whole provided with each means.

(A1) For example, in an exemplary embodiment, in a case in which the integrated controller 100 decides commands to the robot 400, a program executed by the integrated controller 100 to decide the commands to the robot 400 corresponds to the user program 30.

(A2) In an exemplary embodiment, sometimes the integrated controller 100 instructs the robot controller 300 with the script to be executed by the robot controller 300. In such cases, at least the program executed by the integrated controller 100 to decide the script execution instruction corresponds to the user program 30. The script executed by the robot controller 300 also corresponds to the user program 30 in cases in which the script is produced to cause the robot to execute all or part of a particular work-task accomplished by a series of actions, which is a work-task requested by a user. Note that the script does not correspond to the user program 30 in cases in which, for example, the script is produced to cause the gripper 404 merely to perform an ordinary elemental action such as "open or close".

The system program 32 is not limited to a mode stored and executed only in the integrated controller 100. In both the above cases (A1) and (A2) of the exemplary embodiment, the system program 32 may be stored and executed concentrated in one or other out of the integrated controller 100 or the robot controller 300, or distributed across both. In both the above cases (A1) and (A2) of the exemplary embodiment, the robot controller 300 drives each motor of the robot 400 so as to execute an action to implement a command decided by the integrated controller 100, or a command generated by script being executed by the robot controller 300. Moreover, the control system 1 may be a device that incorporates both the functions of the integrated controller 100 and the functions of the robot controller 300.

Moreover, the control system 1 may be implemented as a system that coordinates with the robot 400 over a wide area network.

For example, a function to drive each of the motors of the robot 400 may alone be disposed in the vicinity of the robot 400, from out of the functions of the robot controller 300 of the exemplary embodiment, and by connecting this over the internet, each of the means (the user program acquisition means 162, the user program execution means 164, the system program storage means 166, and the system program execution means 168) may be disposed in one or plural computers connected to the internet.

Note that the above exemplary embodiment is merely a configuration example of the present disclosure to be described in an exemplary manner. The technology disclosed herein is not limited to the specific embodiments described above, and various modifications are possible within a range of the technical idea thereof.

Moreover, the processing executed by the CPU reading and executing software (a program) in the exemplary embodiment may be implemented by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute recognition processing, such as an application specific integrated circuit (ASIC). The processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

The entire content of the disclosure of Japanese Patent Application No. 2022-004708 filed on January 14, 2022 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

### Explanation of the Reference Numerals

- 1: control system

- 30: user program
- 32: system program
- 100: integrated controller
- 160: program function section
- 162: user program acquisition means
- 164: user program execution means
- 166: system program storage means
- 168: system program execution means

## Claims

1. A control system, comprising:
a user program acquisition means that acquires a user program for causing a particular work-task to be executed by a robot, the work-task being requested by a user and accomplished by a series of actions;
a user program execution means that executes the user program;
a system program storage means that stores a system program prescribing processing to detect an occurrence of a protection stop event in the robot, processing to stop execution of the user program when the protection stop event has occurred, and processing to restart execution of the user program from a predetermined user program recovery position; and
a system program execution means that executes the system program.

2. The control system of claim 1, wherein the processing to restart execution of the user program has satisfaction of a restart requirement as a condition of restart.

3. The control system of claim 2, wherein the restart requirement includes at least one of occurrence of a malfunction not having been detected as a result of self-diagnosis, or divergence falling within a reference value for divergence between a position and orientation of a robot after a protection stop and a planned position and orientation corresponding to the position and orientation.

4. The control system of any one of claim 1 to claim 3, wherein the system program prescribes processing that enables use, from the user program, of restart data utilized in execution after restarting the user program.

5. The control system of claim 4, wherein the restart data includes a stop section that is a section in which a stop of execution in the user program has occurred.

6. The control system of any one of claim 1 to claim 5, further comprising a recovery position data acquisition means that acquires recovery position data, wherein:
the recovery position data includes a plurality of recovery positions of the user program associated with a plurality of stop section candidates of the user program; and
the processing to restart execution of the user program is processing to restart execution of the user program in accordance with the recovery position data.

7. A program that is executable by one computer or a plurality of cooperating computers to function as:
a user program acquisition means that acquires a user program for causing a particular work-task to be executed by a robot, with the work-task being requested by a user and accomplished by a series of actions;
a user program execution means that executes the user program;
a system program storage means that stores a system program prescribing processing to detect an occurrence of a protection stop event in the robot, processing to stop execution of the user program when the protection stop event has occurred, and processing to restart execution of the user program from a predetermined user program recovery position; and
a system program execution means that executes the system program.
